# EUROPEAN PATENT SPECIFICATION

(11) **EP 3 995 283 B1**
(45) Date of publication and mention of the grant of the patent: **11.10.2023**
(21) Application number: 20206700.5
(22) Date of filing: 10.11.2020
(51) Int. Cl.: B29C 45/17, B29C 45/42, B23K 26/0622, B29C 37/00, B29C 45/38, B23K 26/08, B23K 26/36, B23K 26/402

(54) **LASER CUTTING OF MICROINJECTION MOULDED PARTS**
LASERSCHNEIDEN VON MIKROSPRITZGUSSTEILEN
DÉCOUPE AU LASER DE PIÈCES MOULÉES PAR MICRO-INJECTION

(43) Date of publication of application: 11.05.2022
(73) Proprietor: Gerresheimer Regensburg GmbH, 93047 Regensburg (DE)
(72) Inventor: DEHLING, Michael, 93047 Regensburg (DE); PREY, Johannes, 93047 Regensburg (DE)
(74) Representative: Bardehle Pagenberg Partnerschaft mbB Patentanwälte Rechtsanwälte

(56) References cited:
- EP-A1- 1 294 555
- EP-B1- 1 294 555
- WO-A1-2010/096072
- WO-A1-2010/099507
- WO-A1-2017/121311
- WO-A2-2007/005639
- WO-A2-2011/140282
- CN-A- 110 239 121
- DE-A1-102017 002 986
- JP-A- H0 490 319
- JP-A- H09 262 898
- JP-A- 2015 177 900
- JP-A- 2019 500 251
- KR-A- 20080 079 091
- US-A1- 2002 110 612
- US-A1- 2005 220 681
- US-A1- 2009 236 322

## Description

### Field of the invention

The present invention relates to a separation system, an injection molding system, comprising the separation system and a method for separating a sprue from an injection molded component, particularly a micro-injection molded component.

### Background art

Injection molded components and micro injection molded components include a sprue, where the melt has entered the cavity of the injection mold. In an area around the sprue (sprue section), the molded component may have disturbed material properties, that may result from the inflow behavior of the melt into the cavity of the injection mold and/or the cooling behavior in the sprue section of the component.

Further, particularly in the field of micro-injection molding, the melt may be guided to the cavity of the injection mold via a sprue channel. A sprue channel may guide melt to multiple cavities of an injection mold (multi-cavity mold). The molding of the sprue channel is not part of the molded component and has to be removed.

For these and other reasons, it is oftentimes undesired to have the sprue section on the later functional component. Accordingly, the sprue section has to be separated from the later functional component, i.e. the component section.

In the art, the sprue or sprue section is broken off or cut off along a predefined separation line, e.g. using a blade or a laser beam (for this method see for example document JP H04 90319 A). Those known separation techniques provide a break edge or cutting edge, respectively that has a poor surface quality. For example, burrs may remain, or loosened cutting/breaking particles may be generated. Those burrs and particles are undesired or even inadmissible, for example, in case the molded component is for medical use. In the field of medical grade injection molding highest demands are exacted on components, especially on their material and surface quality, in order not to injure the patient (e.g. by burrs or loose particles) and/or contaminate sterile environments (e.g. by particles).

Further, cutting and breaking oftentimes negatively affects the area around the separation line, as the material is squeezed during cutting and/or breaking. Additionally, squeezing may lead to an undesired deviation from the separation line, which may destroy the component.

When using blades for separating a sprue section, those blades are prone to wear and have to be sharpened and/or replaced, leading to high maintenance costs and maintenance times.

Thus, there is a need in the art to overcome the aforementioned drawbacks.

### Summary

This object is at least partially achieved by a separation system, an injection molding system, comprising the separation system, a method for separating a sprue from an injection molded component, particularly a micro-injection molded component, and an injection molded component, according to the independent claims. Further aspects of the invention are defined in the dependent claims.

In particular, the object is at least partially achieved by a separation system for separating a sprue from an injection molded component. The molded component may be a micro-injection molded component. Micro-injection molded components typically have a component weight less than 1 g. Further, the wall thickness of the micro-injection molded component or a wall thickness of a certain section thereof may be less than 0.2 mm, optionally, less than 0.1 mm.

The separation system comprises at least one laser source, wherein the laser source is configured to emit and direct a laser beam onto the component. The separation system comprises further at least one component holding device, that is assigned to the laser source and that is adapted to hold and move the component in such a way that the laser beam follows a predefined separation line on the component. Thus, a separation can be achieved, without significant deviation from the predefined separation line, leading to less rejections. The predefined separation line separates a sprue section of the component, including a sprue, from a component section of the component. The sprue section is an area around the sprue, and the component section is the section of the molded component for later functional use.

Further, the laser source is configured to emit the laser beam such that separating the sprue section from the component section along the separation line is performed under photoablation.

Due to the photoablation material is removed along the separation line from the surface of the component. The material is heated very locally, and the heated material evaporates or sublimates due to the absorbed laser energy. Further, the material may be converted to plasma, and thus removed. Photoablation allows to provide a very exact separation line and a separation edge, having a high surface quality without a burr and loosened particles. Further, the area nearby the separation line is hardly affected, as it is nearly not heated.

In the separation system a laser source may be assigned to one component holding device. Accordingly, the separation is performed by a single laser. This allows to provide a simple system set-up. Further, multiple laser sources and respective component holding devices may be arranged in parallel, in order to increase the through put.

The laser source may be adapted to emit a laser beam, having a wavelength that is in a range of 250 nm to 380 nm, preferably in a range of 300 nm to 360 nm and most preferably in a range of 335 nm to 345 nm. It has shown that using a laser source in the UV-A range provides separation edges with a high surface quality for thermoplastic injection molded components. However, UV-B lasers (wavelength in the range of 280 nm to 315 nm) and/or UV-C lasers (wavelength less than 280 nm) may also be used for separating the sprue section.

Further, the laser source may be a continuous wave laser source or a pulsed laser source. Particularly, the laser source may be a picosecond laser, or a femtosecond laser, wherein a pulse width of the laser source is preferably in a range of 100 fs to 300 fs, more preferably in a range of 150 fs to 250 fs, and most preferably in a range of 210 fs to 230 fs. It has shown that a pulse width in a range of 210 fs to 230 fs provides high quality separation edges for thermoplastic injection molded components.

The laser source may provide a laser beam having an average power (cutting power) in the range of 3 to 9 W, preferably in the range of 4 to 8 W and most preferably in the range of 4.5 to 7 W. The optimal cutting power may be dependent on the material of the component (e.g. a thermoplastic) to be cut (cf. table 1, below).

The laser source may be configured to emit the laser beam such that separating the sprue section from the component section along the separation line takes less than 1 second, preferably less than 0.8 seconds; and most preferably less than 0.5 seconds. Thus, excess heating of the component can be prevented, resulting in a high component quality, while providing a high throughput. In this example, the wall thickness of the component to be cut may be in a range of 0.10 mm to 0.80 mm, preferably in a range of 0.15 mm to 0.60 mm and most preferably in a range of 0.20 mm to 0.40 mm.

The laser source may be configured to emit the laser beam, such that the laser beam performs an oscillating movement on separation line or a section of the separation line. The oscillating movement can be achieved by moving the laser source and/or by deflecting the laser beam, e.g. using mirror(s). The oscillating movement increases the ablation area of the laser beam from a point-shaped area to a line-shaped area, thereby further reducing thermal stress on the component.

The oscillating movement may have an oscillating velocity of at least 300 mm/s, preferably of at least 600 mm/s, and most preferably of at least 900 mm/s. The optimal oscillating velocity may be dependent on the material of the component (e.g. a thermoplastic) to be cut (cf. table 1, below).

The component holding device may be configured to rotate the component, wherein the axis of rotation is preferably the longitudinal axis, L, of the component. When rotating the component, substantially rotationally symmetric components can be processed, such as catheter tips, cannulas, needles, and/or the like. The rotational movement may be provided by an electric or pneumatic motor, that may be coupled with a gear, having an output shaft. The output shaft can be coupled (directly or indirectly) with the component, to hold the component by reg component holding device.

The component holding may be configured to rotate the component with a predefined rotational speed, wherein the optimal rotational speed may be dependent on the material (e.g. a thermoplastic) and the outer circumference of the component to be cut (cf. table 1, below). For example, the rotational speed may be in a range of 50 to 1000 rpm, preferably in a range of 60 to 700 rpm, and most preferably in a range of 70 to 600 rpm. In this example, the outer circumference of the component to be cut may be in a range of 0.8 mm to 2 mm, preferably in a range of 1 mm to 1.6 mm and most preferably in a range of 1.1 mm to 1.3 mm.

Further, the component holding device may be configured to move the component along an X-axis and/or a Y-axis, wherein optionally the X-axis and/or the Y-axis is perpendicular to the laser beam. Thus, complex separation lines can be traversed with the laser beam.

The component may be a thermoplastic component, and may optionally comprise or consist of a thermoplastic elastomer, TPE, and/or poly(p-phenylene ether), PPE. The TPE may include one of the following: Styrenic block copolymers, TPS (TPE-s), Thermoplastic polyolefinelastomers, TPO (TPE-o), Thermoplastic Vulcanizates, TPV (TPE-v or TPV), Thermoplastic polyurethanes, TPU (TPU), Thermoplastic copolyester, TPC (TPE-E), Thermoplastic polyamides, TPA (TPE-A) and/or non-classified thermoplastic elastomers, TPZ. Further, the component may comprise or consist of at least one of the following: POM (polyoxymethylene), PC (polycarbonate), PEBA (polyetherblockamide), PBT (polybutylene terephthalate) and/or COP (Cyclo Olefin Polymer).

The following table gives an overview of exemplary cutting powers, rotational speeds and oscillating velocities for different materials:

**Table 1: exemplary cutting power, rotational speed and oscillating velocity for different materials**

| **Material** | **Cutting Power** | **Rotational Speed** | **Oscillating Velocity** |
|---|---|---|---|
| PEBA | 4.5 W | 600 rpm | 0 mm/s |
| PBT | 5.8 W | 70 rpm | 600 mm/s |
| COP | 7 W | 70 rpm | 950 mm/s |

It is to be understood, that the above values are only exemplary and that in particular other combinations of rotational speed and oscillating velocity can lead to good a good cutting quality. For example, in case the oscillating velocity is reduced, the rotational speed can be increased, respectively.

The separation system further comprises a separation chamber. The separation chamber is adapted to receive the component at least partially so that an intersection point between the laser beam and the separation line lies within the separation chamber. Further, the separation chamber is configured to be filled with an inert gas. The inert gas may include at least one of the following: nitrogen, helium, neon, argon, krypton, xenon, sulfur hexafluoride, and/or the like. Thus, the risk of burning the component with the laser is reduced and higher laser flux can be used for photoablation.

The component holding device may comprises a rotatively driven adaptor shaft seat, wherein the adaptor shaft seat is configured to receive an adaptor shaft, so that the adaptor shaft rotates with the adaptor shaft seat. The adaptor shaft is exchangeable and may be adapted to a specific component. Particularly, the adaptor shaft comprises a (specific) component receptacle for coupling the component to the adaptor shaft. Thus, the component can be moved by the component holding device, while being coupled to the component receptacle. For driving the adaptor shaft seat, the adaptor shaft seat may be coupled or integrally formed with an output shaft of a motor or a gear.

The coupling between the component receptacle and the component may be a positive-fit coupling and/or a force-fit coupling. For example, the component receptacle may be formed correspondingly to the inner structure of the component. As the component receptacle may be specific, damaging the component can be prevented, that may be caused by universal coupling and/or clamping devices.

The object is further at least partially achieved by an injection molding system, comprising an injection molding device that includes an injection mold for molding a component, and a separation system as described above, wherein the separation system is configured to receive a component molded by the injection molding device and to separate a sprue section from the injection molded component. The injection molding device may be a micro injection molding device. With the injection molding system high quality components can be provided, as the sprue section can be separated from the component sections, while providing high quality separation edges.

The injection moulding system may further comprise a handling device, which is configured to remove an injection molded component from the injection mold of the injection molding device, to transfer the injection molded component to the separation system, and optionally to couple the injection molded component with a component receptacle of the component holding device. The handling device may comprise a gripper and a manipulator, such as an industrial robot, wherein the gripper is associated with the manipulator and adapted to grip and to release the component.

The object is further at least partially achieved by a method for separating a sprue from an injection molded component, particularly a micro-injection molded component, the method comprises the following steps:
- providing an injection molded component (by injection molding), and coupling the component with a component holding device of a separation system as described above,
- emitting a laser beam onto the component and moving the component, using the component holding device, in such a way that the laser beam follows a predefined separation line on the component, and
- separating, by the laser beam, a sprue section of the component from a component section of the component along the separation line under photoablation.

According to the method the component holding device may move the component rotatively, preferably around a longitudinal axis, L, of the component, and/or along an X-axis and/or a Y-axis, wherein the X-axis and/or Y-axis are preferably aligned perpendicular to the laser beam.

With the method all advantages described above with respect to the separation system can be achieved.

The object is further at least partially achieved by an injection molded component obtained by the method described above, wherein the injection molded component has a separation line and does not comprise a sprue section. The separation line of the injection molded component, and particularly an respective separation edge, has a high surface quality without a burr and loosened particles. Further, the area nearby the separation line is hardly affected, as heating during separation can be effectively avoided.

### Brief description of the figures

In the following, the accompanying figures are briefly described:
- Fig. 1A: is a schematic view of a separation system;
- Fig. 1B: is a schematic view of the separation system of Fig. 1A, wherein a component is coupled to a component holding device;
- Fig. 2: is a schematic view of a component, being processed by a separation system, and
- Fig. 3: is a schematic flow diagram of a method for separating a sprue from an injection molded component.

### Detailed description of the figures

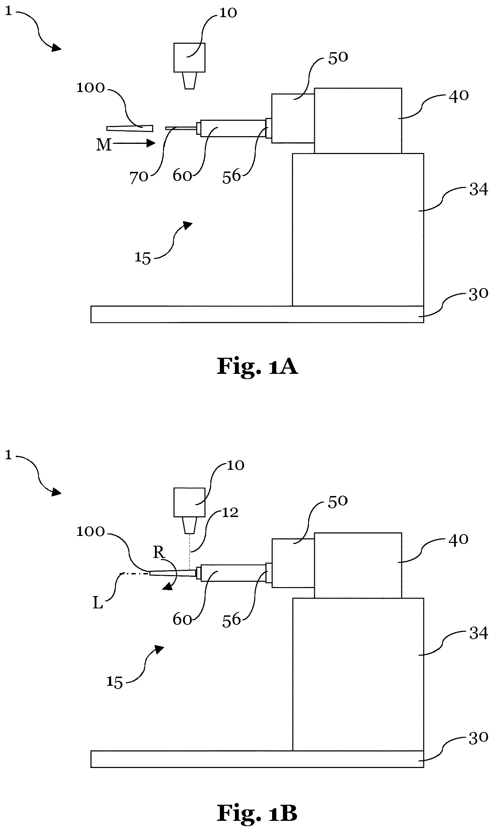

Fig. 1A is a schematic view of a separation system 1. In the view of Fig. 1A, an injection molded component 100 is not yet coupled to the component holding device 15. Fig. 1B shows the same separation system 1, wherein the component 100 is now coupled to and can be moved (rotated) by the component holding device 15.

The separation system 1 comprises a laser source 10, wherein the laser source is configured to emit and direct a laser beam 12 onto the component 100, when the same is coupled to the component holding device 15.

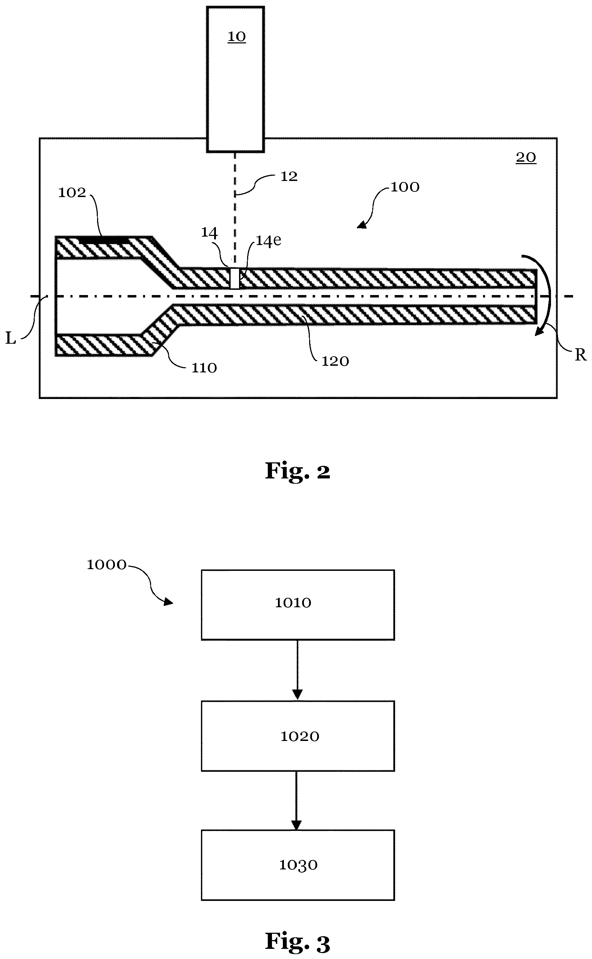

The component holding device 15 is assigned to the laser source 10 and is adapted to hold and move the component 100 in such a way that the laser beam 12 follows a predefined separation line on the component 100. The predefined separation line separates a sprue section 110 of the component 100, including a sprue 102, from a component section 120 of the component 100 (cf. Fig. 2).

The component holding device 15, as shown in Fig. 1A and 1B, is configured to rotate the component 100, wherein the axis of rotation is preferably the longitudinal axis, L, of the component 100. Further, the component holding device 15 may comprise a base plate element 30, serving as stand. A motor 40 (electric of pneumatic) may be coupled to the base plate element 30 via a motor base element 34. Said motor base element 34 may be adapted to receive at least one of a power source, a motor control and/or a motor converter.

The motor 40 may be comprise an output shaft or may be coupled to a gear 50, including an output shaft. The output shaft may be coupled or integrally formed with an adaptor shaft seat 56, for driving the adaptor shaft seat 56.

The adaptor shaft seat 56 is configured to receive an adaptor shaft 60, so that the adaptor shaft 60 rotates with the adaptor shaft seat 56 in a rotation direction R. The adaptor shaft 60 is exchangeable and may be adapted to a specific component 100. Particularly, the adaptor shaft 60 may comprise a (specific) component receptacle 70 for coupling the component 100 to the adaptor shaft 50. Thus, the component 100 can be rotated by the component holding device 15, while being coupled to the component receptacle 70.

For example, the component 100 may be a catheter tip and the component receptacle 70 may be adapted to provide a positive-fit and/or a force-fit with the catheter tip. For coupling the component 100 with the component holding device 15, particularly, with the component receptacle 70, the component 100 may be mated with the component holding device 15 (particularly, with the component receptacle 70) in a mating direction M. This coupling may be automated and may be carried out by a handling device of an injection molding system.

The handling device (not shown) may be configured to remove an injection molded component 100 from an injection mold of an injection molding device, to transfer the injection molded component 100 to the separation system 1, and to couple the injection molded component 200 with a component receptacle 70 of the component holding device 15.

Additionally, or alternatively, the component holding device 15 may be configured to move the component 100 along an X-axis and/or a Y-axis, wherein the X-axis and/or the Y-axis is perpendicular to the laser beam 12.

The laser source 10 is configured to emit the laser beam 12 such that separating the sprue section 110 from the component section 120 along the separation line 14 is performed under photoablation. Photoablation allows to provide a separation edge 14e, having a high surface quality.

Fig. 2 is a schematic view of a component 100, being processed by a separation system 1, as shown in Figs. 1A and 1B. The component 100 comprises a sprue 102 and a sprue section 110, surrounding the sprue 102. Further, the component 100 comprises a component section 120, that forms the functional component. The component section 120 shall be separated from the sprue section 110 along a predefined separation line 14, surrounding the component 100.

For separating the sprue section 110 from the component section 120, a laser beam 12 emitted from a laser source 10 is directed onto the component 100. Further, the component 100 is held and rotated by a component holding device (not shown) around a longitudinal axis L in a rotation direction R, so that the laser beam 12 follows the predefined separation line 14 on the component 100. The laser source 10 is configured to emit the laser beam such that separating the sprue section 110 from the component section 120 is performed under photoablation. Thus, a separation edge 14e, with high surface quality can be achieved.

Further, the separation system 1 comprises a separation chamber 20. The separation chamber 20 receives the component 100 at least partially so that an intersection point between the laser beam 12 and the separation line 14 lies within the separation chamber 20. The separation chamber 20 is configured to be filled with an inert gas, so as to protect the component from chemical reactions (e.g. burns) induced by the laser beam 12.

Fig. 3 is a schematic flow diagram of a method 1000 for separating a sprue 102 from an injection molded component 100. The method 1000 comprises the following steps:
- providing 1010 an injection molded component 100 (by injection molding), and coupling the component with a component holding device 15 of a separation system 1,
- emitting 1020 a laser beam 12 onto the component 100 and moving the component 100, using the component holding device 15, in such a way that the laser beam 12 follows a predefined separation line 14 on the component 100, and
- separating 1030, by the laser beam 12, a sprue section 110 of the component 100 from a component section 120 of the component 100 along the separation line 14 under photoablation.

### List of reference signs

- 1: separation system
- 10: laser source
- 12: laser beam
- 14: separation line
- 14e: separation edge
- 15: component holding device
- 20: separation chamber
- 30: base plate element
- 34: motor base element
- 40: motor
- 50: gear
- 56: adaptor shaft seat
- 60: adaptor shaft
- 70: component receptacle
- 100: component
- 102: sprue
- 110: sprue section
- 120: component section
- R: direction of rotation
- M: mating direction
- L: longitudinal axis

## Claims

1. A separation system (1) for separating a sprue (102) from an injection molded component (100), particularly a micro-injection molded component (100), the system comprising:
at least one laser source (10), wherein the laser source is configured to emit and direct a laser beam (12) onto the component (100), and
at least one component holding device (15), that is assigned to the laser source (10) and that is adapted to hold and move the component (100) in such a way that the laser beam (12) follows a predefined separation line (14) on the component (100), wherein the predefined separation line (14) separates a sprue section (110) of the component, including a sprue (102), from a component section (120) of the component (100), and wherein
the laser source is configured to emit the laser beam such that separating the sprue section (110) from the component section (120) along the separation line is performed under photoablation, the separation system (1) being **characterized in that** it further comprises
a separation chamber (20), wherein the separation chamber (20) is adapted to receive the component (100) at least partially so that an intersection point between the laser beam (12) and the separation line (14) lies within the separation chamber (20), and wherein the separation chamber (20) is configured to be filled with an inert gas.

2. The separation system (1) according to claim 1, wherein the laser source is assigned to one component holding device (15).

3. The separation system (1) according to claim 1 or 2, wherein the laser source (10) is adapted to emit a laser beam (12), having a wavelength that is in a range of 250 nm to 380 nm, preferably in a range of 300 nm to 360 nm and most preferably in a range of 335 nm to 345 nm.

4. The separation system (1) according to any one of the preceding claims, wherein the laser source (10) is a picosecond laser, or a femtosecond laser, wherein a pulse width of the laser source (10) is preferably in a range of 100 fs to 300 fs, more preferably in a range of 150 fs to 250 fs, and most preferably in a range of 210 fs to 230 fs.

5. The separation system (1) according to any one of the preceding claims, wherein the laser source (10) is configured to emit the laser beam (12) such that separating the sprue section (110) from the component section (120) along the separation line takes less than 1 second, preferably less than 0.8 seconds, and most preferably less than 0.5 seconds.

6. The separation system (1) according to any one of the preceding claims, wherein the laser source (10) is configured to emit the laser beam (12), such that the laser beam (12) performs an oscillating movement on separation line (14) or a section of the separation line (14).

7. The separation system (1) according to any one of the preceding claims, wherein the component holding device (15) is configured to rotate the component (100), and wherein the axis of rotation is preferably the longitudinal axis (L) of the component (100), and/or wherein the component holding device (15) is configured to move the component along an X-axis and/or a Y-axis, wherein optionally the X-axis and/or the Y-axis is perpendicular to the laser beam (12).

8. The separation system (1) according to any one of the preceding claims, wherein the component (100) is a thermoplastic component, and optionally comprises a thermoplastic elastomer, TPE, and/or poly(p-phenylene ether), PPE.

9. The separation system (1) according to one of the preceding claims, wherein the component holding device (15) comprises a rotatively driven adaptor shaft seat (56), wherein
the adaptor shaft seat (56) is configured to receive an adaptor shaft (60), so that the adaptor shaft rotates with the adaptor shaft seat (56), and wherein
the adaptor shaft (60) comprises a component receptacle (70) for coupling the component (100) to the adaptor shaft.

10. An injection molding system, comprising an
injection molding device that includes an injection mold for molding a component (100), and
a separation system (1) according to any one of the preceding claims, wherein the separation system (1) is configured to receive a component molded by the injection molding device and to separate a sprue section (110) from the injection molded component (100).

11. The injection molding system, according to the preceding claim, the system further comprising:
handling device, which is configured to remove an injection molded component (100) from the injection mold of the injection molding device, to transfer the injection molded component (100) to the separation system (1), and optionally to couple the injection molded component (100) with a component receptacle (70) of the component holding device (15).

12. A method (1000) for separating a sprue (102) from an injection molded component (100), particularly a micro-injection molded component, the method comprising the following steps:
providing (1010) an injection molded component (100), and coupling the component (100) with the separation system according to any one of claims 1 to 9 via said system's component holding device (15),
emitting (1020) a laser beam (12) onto the component and moving the component (100), using the component holding device (15), in such a way that the laser beam (12) follows a predefined separation line (14) on the component (100),
separating (1030), by the laser beam (12), a sprue section (110) of the component from a component section (120) of the component along the separation line under photoablation.

13. The method (1000) according to claim 12, wherein
component holding device (15) moves the component (100) rotatively, preferably around a longitudinal axis (L) of the component, and/or wherein the movement of the component is a movement along an X-axis and/or a Y-axis, wherein the X-axis and/or Y-axis are preferably aligned perpendicular to the laser beam (12).

## Patentansprüche

1. Trennsystem (1) zum Trennen eines Angusses (102) von einem spritzgegossenen Bauteil (100), insbesondere einem mikrospritzgegossenen Bauteil (100), das System umfassend:
mindestens eine Laserquelle (10), wobei die Laserquelle dazu eingerichtet ist, einen Laserstrahl (12) zu emittieren und auf das Bauteil (100) zu richten, und
mindestens eine der Laserquelle (10) zugeordnete Bauteilhaltevorrichtung (15), die dazu eingerichtet ist, das Bauteil (100) derart zu halten und zu bewegen, dass der Laserstrahl (12) einer vorgegebenen Trennlinie (14) auf dem Bauteil (100) folgt, wobei die vorgegebene Trennlinie (14) einen Angussabschnitt (110) des Bauteils, einschließlich eines Angusses (102), von einem Bauteilabschnitt (120) des Bauteils (100) trennt, und wobei
die Laserquelle dazu eingerichtet ist, den Laserstrahl derart zu emittieren, dass ein Trennen des Angussabschnitts (110) von dem Bauteilabschnitt (120) entlang der Trennlinie unter Photoablation erfolgt, wobei das Trennsystem (1) **dadurch gekennzeichnet ist, dass** es ferner umfasst
eine Trennkammer (20), wobei die Trennkammer (20) dazu eingerichtet ist, das Bauteil (100) zumindest teilweise aufzunehmen, so dass ein Schnittpunkt zwischen dem Laserstrahl (12) und der Trennlinie (14) innerhalb der Trennkammer (20) liegt, und wobei die Trennkammer (20) dazu eingerichtet ist, mit einem Inertgas gefüllt zu werden.

2. Trennsystem (1) nach Anspruch 1, wobei die Laserquelle einer Bauteilhaltevorrichtung (15) zugeordnet ist.

3. Trennsystem (1) nach Anspruch 1 oder 2, wobei die Laserquelle (10) dazu eingerichtet ist, einen Laserstrahl (12) mit einer Wellenlänge zu emittieren, die in einem Bereich von 250 nm bis 380 nm, vorzugsweise in einem Bereich von 300 nm bis 360 nm und am meisten bevorzugt in einem Bereich von 335 nm bis 345 nm liegt.

4. Trennsystem (1) nach einem der vorhergehenden Ansprüche, wobei die Laserquelle (10) ein Pikosekundenlaser oder ein Femtosekundenlaser ist, wobei eine Pulsbreite der Laserquelle (10) vorzugsweise in einem Bereich von 100 fs bis 300 fs, bevorzugter in einem Bereich von 150 fs bis 250 fs und am meisten bevorzugt in einem Bereich von 210 fs bis 230 fs liegt.

5. Trennsystem (1) nach einem der vorhergehenden Ansprüche, wobei die Laserquelle (10) dazu eingerichtet ist, den Laserstrahl (12) derart zu emittieren, dass ein Trennen des Angussabschnitts (110) von dem Bauteilabschnitt (120) entlang der Trennlinie weniger als 1 Sekunde, vorzugsweise weniger als 0,8 Sekunden und am meisten bevorzugt weniger als 0,5 Sekunden dauert.

6. Trennsystem (1) nach einem der vorhergehenden Ansprüche, wobei die Laserquelle (10) dazu eingerichtet ist, den Laserstrahl (12) derart zu emittieren, dass der Laserstrahl (12) eine oszillierende Bewegung auf der Trennlinie (14) oder einem Abschnitt der Trennlinie (14) ausführt.

7. Trennsystem (1) nach einem der vorhergehenden Ansprüche, wobei die Bauteilhaltevorrichtung (15) dazu eingerichtet ist, das Bauteil (100) zu drehen, und wobei die Drehachse vorzugsweise die Längsachse (L) des Bauteils (100) ist, und/oder wobei die Bauteilhaltevorrichtung (15) dazu eingerichtet ist, das Bauteil entlang einer X-Achse und/oder einer Y-Achse zu bewegen, wobei optional die X-Achse und/oder die Y-Achse senkrecht zu dem Laserstrahl (12) ist.

8. Trennsystem (1) nach einem der vorhergehenden Ansprüche, wobei das Bauteil (100) ein thermoplastisches Bauteil ist, und optional ein thermoplastisches Elastomer, TPE, und/oder Poly(p-phenylenether), PPE, umfasst.

9. Trennsystem (1) nach einem der vorhergehenden Ansprüche, wobei die Bauteilhaltevorrichtung (15) einen drehend angetriebenen Adapterwellensitz (56) umfasst, wobei
der Adapterwellensitz (56) dazu eingerichtet ist, eine Adapterwelle (60) aufzunehmen, so dass sich die Adapterwelle mit dem Adapterwellensitz (56) dreht, und wobei
die Adapterwelle (60) eine Bauteilaufnahme (70) zum Koppeln des Bauteils (100) mit der Adapterwelle umfasst.

10. Spritzgießsystem, umfassend
eine Spritzgießvorrichtung, die eine Spritzgießform zum Formen eines Bauteils (100) umfasst, und
ein Trennsystem (1) nach einem der vorhergehenden Ansprüche, wobei das Trennsystem (1) dazu eingerichtet ist, ein von der Spritzgießvorrichtung geformtes Bauteil aufzunehmen und einen Angussabschnitt (110) von dem spritzgegossenen Bauteil (100) zu trennen.

11. Spritzgießsystem nach dem vorhergehenden Anspruch, das System ferner umfassend:
eine Handhabungsvorrichtung, die dazu eingerichtet ist, ein spritzgegossenes Bauteil (100) aus der Spritzgießform der Spritzgießvorrichtung zu entnehmen, das spritzgegossene Bauteil (100) an das Trennsystem (1) zu übergeben, und optional das spritzgegossene Bauteil (100) mit einer Bauteilaufnahme (70) der Bauteilhaltevorrichtung (15) zu koppeln.

12. Verfahren (1000) zum Trennen eines Angusses (102) von einem spritzgegossenen Bauteil (100), insbesondere einem mikrospritzgegossenen Bauteil, das Verfahren umfassend die folgenden Schritte:
Bereitstellen (1010) eines spritzgegossenen Bauteils (100), und Koppeln des Bauteils (100) mit dem Trennsystem nach einem der Ansprüche 1 bis 9 über dessen Bauteilhaltevorrichtung (15),
Emittieren (1020) eines Laserstrahls (12) auf das Bauteil und Bewegen des Bauteils (100) unter Verwendung der Bauteilhaltevorrichtung (15) derart, dass der Laserstrahl (12) einer vorgegebenen Trennlinie (14) auf dem Bauteil (100) folgt,
Trennen (1030), durch den Laserstrahl (12), eines Angussabschnitts (110) des Bauteils von einem Bauteilabschnitt (120) des Bauteils entlang der Trennlinie unter Photoablation.

13. Verfahren (1000) nach Anspruch 12, wobei
die Bauteilhaltevorrichtung (15) das Bauteil (100) drehend bewegt, vorzugsweise um eine Längsachse (L) des Bauteils, und/oder wobei die Bewegung des Bauteils eine Bewegung entlang einer X-Achse und/oder einer Y-Achse ist, wobei die X-Achse und/oder Y-Achse vorzugsweise senkrecht zu dem Laserstrahl (12) ausgerichtet sind.

## Revendications

1. Un système de séparation (1) pour la séparation d'une carotte (102) d'avec un composant moulé par injection (100), en particulier un composant moulé par micro-injection (100), le système comprenant :
au moins une source laser (10), la source laser étant configurée pour émettre et diriger un faisceau laser (12) sur le composant (100), et
au moins un dispositif de maintien du composant (15), qui est affecté à la source laser (10) et qui est apte à maintenir et déplacer le composant (100) d'une manière telle que le faisceau laser (12) suive une ligne de séparation prédéfinie (14) sur le composant (100), la ligne de séparation prédéfinie (14) séparant une section de carotte (110) du composant, incluant une carotte (102), d'avec une section de composant (120) du composant (100), et dans lequel
la source laser est configurée pour émettre le faisceau laser de telle sorte que la séparation de la section de carotte (110) d'avec la section de composant (120) le long de la ligne de séparation soit effectuée sous photoablation,
le système de séparation (1) étant **caractérisé en ce qu'**il comprend en outre :
une chambre de séparation (20), la chambre de séparation (20) étant apte à recevoir le composant (100) au moins partiellement de manière qu'un point d'intersection entre le faisceau laser (12) et la ligne de séparation (14) se situe à l'intérieur de la chambre de séparation (20), et la chambre de séparation (20) étant configurée pour être remplie d'un gaz inerte.

2. Le système de séparation (1) selon la revendication 1, dans lequel la source laser est affectée à un dispositif de maintien du composant (15).

3. Le système de séparation (1) selon la revendication 1 ou 2, dans lequel la source laser (10) est apte à émettre un faisceau laser (12) ayant une longueur d'onde qui est comprise dans une plage de 250 nm à 380 nm, de préférence dans une plage de 300 nm à 360 nm et le plus préférablement dans une plage de 335 nm à 345 nm.

4. Le système de séparation selon l'une des revendications précédentes, dans lequel la source laser (10) est un laser picoseconde ou un laser femtoseconde, une largeur d'impulsion de la source laser étant de préférence dans une plage de 100 fs à 300 fs, plus préférablement dans une plage de 150 fs à 250 fs, et le plus préférablement dans une plage de 210 fs à 230 fs.

5. Le système de séparation (1) selon l'une des revendications précédentes, dans lequel la source laser (10) est configurée pour émettre le faisceau laser (12) de telle manière que la séparation de la section de carotte (110) d'avec la section de composant (120) le long de la ligne de séparation prenne moins d'1 seconde, de préférence moins de 0,8 seconde, et le plus préférablement moins de 0,5 seconde.

6. Le système de séparation (1) selon l'une des revendications précédentes, dans lequel la source laser (10) est configurée pour émettre le faisceau laser (12) de telle sorte que le faisceau laser (12) effectue un mouvement d'oscillation sur la ligne de séparation (14) ou sur une section de la ligne de séparation (14).

7. Le système de séparation (1) selon l'une des revendications précédentes, dans lequel le dispositif de maintien du composant (15) est configuré pour faire tourner le composant (100), et dans lequel l'axe de rotation est de préférence l'axe longitudinal (L) du composant (100), et/ou dans lequel le dispositif de maintien du composant (15) est configuré pour déplacer le composant le long d'un axe X et/ou d'un axe Y, l'axe X et/ou l'axe Y étant éventuellement perpendiculaires au faisceau laser (12).

8. Le système de séparation (1) selon l'une des revendications précédentes, dans lequel le composant (100) est un composant en thermoplastique, et comprend éventuellement un élastomère thermoplastique, TPE, et/ou un poly(p-phénylène éther), PPE.

9. Le système de séparation (1) selon l'une des revendications précédentes, dans lequel le dispositif de maintien du composant (15) comprend un siège d'arbre adaptateur entraîné à rotation (56), dans lequel :
le siège d'arbre adaptateur (56) est configuré pour recevoir un arbre adaptateur (60), de sorte que l'arbre adaptateur tourne avec le siège d'arbre adaptateur (56), et dans lequel
l'arbre adaptateur (60) comprend un réceptacle de composant (70) pour coupler le composant (100) à l'arbre adaptateur.

10. Un système de moulage par injection comprenant :
un dispositif de moulage par injection qui comprend un moule par injection pour le moulage d'un composant (100), et
un système de séparation (1) selon l'une des revendications précédentes, le système de séparation (1) étant configuré pour recevoir un composant moulé par le dispositif de moulage par injection et pour séparer une section de carotte (110) d'avec le composant moulé par injection (100).

11. Le système de moulage par injection selon la revendication précédente, dans lequel le système comprend en outre :
un dispositif de manipulation, qui est configuré pour retirer un composant moulé par injection (100) du moule par injection du dispositif de moulage par injection, pour transférer le composant moulé par injection (100) vers le système de séparation (1), et éventuellement pour coupler le composant moulé par injection (100) à un réceptacle de composant (70) du dispositif de maintien de composant (15).

12. Un procédé (1000) de séparation d'une carotte (102) d'avec un composant moulé par injection (100), en particulier un composant moulé par micro-injection, le procédé comprenant les étapes suivantes :
l'obtention (1010) d'un composant moulé par injection (100), et le couplage du composant (100) avec le système de séparation selon l'une des revendications 1 à 9 par le biais dudit dispositif de maintien de composant (15) du système,
l'émission (1020) d'un faisceau laser (12) sur le composant et le déplacement du composant (100), à l'aide du dispositif de maintien de composant (15), d'une manière telle que le faisceau laser (12) suive une ligne de séparation prédéfinie (14) du composant (100),
la séparation (1030) sous photoablation, par le faisceau laser (12), d'une section de carotte (110) du composant d'avec une section de composant (120) du composant le long de la ligne de séparation.

13. Le procédé (1000) selon la revendication 12, dans lequel
le dispositif de maintien du composant (15) déplace en rotation le composant (100), de préférence autour d'un axe longitudinal (L) du composant, et/ou dans lequel le déplacement du composant est un déplacement le long d'un axe X et/ou d'un axe Y, l'axe X et/ou l'axe Y étant de préférence alignés perpendiculairement au faisceau laser (12).
